# EUROPEAN PATENT APPLICATION

(11) **EP 4 462 582 A1**
(43) Date of publication of application: **13.11.2024**
(21) Application number: 22921117.2
(22) Date of filing: 20.01.2022
(51) Int. Cl.: H01M 50/528, H01M 50/536, H01M 10/0525

(54) **BATTERY CELL, BATTERY, ELECTRIC DEVICE, AND BATTERY CELL MANUFACTURING DEVICE AND METHOD**

(71) Applicant: Contemporary Amperex Technology Co., Limited, Ningde, Fujian 352100 (CN)
(72) Inventor: JIN, Haizu, Ningde, Fujian 352100 (CN); CHI, Qingkui, Ningde, Fujian 352100 (CN); ZOU, Yang, Ningde, Fujian 352100 (CN); PU, Tao, Ningde, Fujian 352100 (CN)
(74) Representative: Gong, Jinping
(86) International application number: PCT/CN2022/073055
(87) International publication number: WO 2023/137674

(57) **Abstract**

The present application provides a battery cell, a battery, an electrical device, and a manufacturing device and method for a battery cell, and relates to the technical field of batteries. The battery cell includes an electrode assembly, a case, an end cover, a first current collecting member, and a second current collecting member, where the case is provided with a first position-limiting portion protruding from the inner side face; the first current collecting member is used for connecting tabs; the second current collecting member is used for connecting the first current collecting member and the first position-limiting portion; and the first current collecting member includes a first region overlapping with the first position-limiting portion along a thickness direction and a second region not overlapping with the first position-limiting portion, the first region and the second region both being welded to the tabs. The first region can be welded to the tab of an outer ring layer, and the second region can be welded to the tab of an inner ring layer, which enables uniform current conduction to be realized, so as to avoid the problem of excessive local overcurrent due to the failure of the tab of the outer ring layer to be connected to the current collecting member, thereby reducing the risk of severe polarization of the tab of the outer ring layer in the cyclic charging and discharging process.

## Description

### TECHNICAL FIELD

The present application relates to the technical field of batteries, and in particular, to a battery cell, a battery, an electrical device, and a manufacturing device and method for a battery cell.

### BACKGROUND

At present, the batteries often used in vehicles are generally lithium-ion batteries, which, as a kind of rechargeable battery, have the advantages of small size, high energy density, high power density, high number of cycles and long storage time.

The battery cell generally includes a case and an electrode assembly, where the case is used to accommodate the electrode assembly and the electrolyte, and the electrode assembly generally includes a positive electrode plate and a negative electrode plate, with electrical energy being generated by the movement of metal ions (e.g., lithium ions) between the positive electrode plate and the negative electrode plate.

For a general battery cell, the electrode assembly needs to be electrically connected to the case to enable the case to serve as a positive output electrode or a negative output electrode of the battery cell. At present, it is inconvenient to implement the electrical connection between the electrode assembly and the case.

### SUMMARY OF THE INVENTION

Embodiments of the present application provide a battery cell, a battery, an electrical device, and a manufacturing device and method for a battery cell, so as to enable easy electrical connection between an electrode assembly and a case.

In a first aspect, embodiments of the present application provide a battery cell including an electrode assembly, a case, an end cover, a first current collecting member, and a second current collecting member, where the electrode assembly has tabs; the case has an opening, the case is used for accommodating the electrode assembly, and the case is provided with a first position-limiting portion protruding from the inner side face; the end cover is used for covering the opening, the first position-limiting portion being used for limiting movement of the end cover towards a direction close to the electrode assembly; the first current collecting member is disposed on the side of the first position-limiting portion facing the electrode assembly along a thickness direction of the end cover, the first current collecting member being used for connecting the tabs; and the second current collecting member is disposed on the side of the first current collecting member facing away from the electrode assembly along the thickness direction, the second current collecting member being used for connecting the first current collecting member and the first position-limiting portion, where the first current collecting member includes a first region overlapping with the first position-limiting portion along the thickness direction and a second region not overlapping with the first position-limiting portion along the thickness direction, the first region and the second region both being welded to the tabs.

In the above technical solution, the first connecting member includes a first region overlapping with the first position-limiting portion along the thickness direction of the end cover and a second region not overlapping with the first position-limiting portion along the thickness direction of the end cover, where the first region can be welded to the tab of an outer ring layer, and the second region can be welded to the tab of an inner ring layer, so that the tabs of the inner ring layer and the outer ring layer can both be connected to the first current collecting member, which enables uniform current conduction to be realized, so as to avoid the problem of excessive local overcurrent due to the failure of the tab of the outer ring layer to be connected to the current collecting member, thereby reducing the risk of severe polarization of the tab of the outer ring layer in the cyclic charging and discharging process, and thereby reducing the risk of lithium precipitation due to polarization. In addition, since the first current collecting member and the second current collecting member are provided in a split manner, it is possible to first connect the first current collecting member to the tab without being restricted by the structure of the case, and then connect the first current collecting member to the first position-limiting portion of the case by the second current collecting member, thereby conveniently realizing the connection of the electrode assembly and the case.

In some embodiments of the first aspect of the present application, the second current collecting member includes a body portion and a connecting portion, where the body portion is stacked with the first current collecting member along the thickness direction, the body portion being used for connecting the side of the first current collecting member facing away from the electrode assembly; and the connecting portion is connected to the body portion, a part of the connecting portion extending to the side of the first position-limiting portion in its protruding direction to effect a connection between the first current collecting member and the first position-limiting portion.

In the above technical solution, the body portion is stacked with the first current collecting member along the thickness direction and is electrically connected to the first current collecting member, which can improve the current conduction capability of the battery cell. A part of the connecting portion extends to the side of the first position-limiting portion in its protruding direction, thereby effecting a connection between the first current collecting member and the first position-limiting portion, which increases the contact area between the second current collecting member and the first position-limiting portion, so as to increase the overcurrent area between the case and the second current collecting member.

In some embodiments of the first aspect of the present application, the connecting portion includes a first connecting portion and a second connecting portion, where the first connecting portion is used for abutting against the side of the first position-limiting portion in its protruding direction; and the second connecting portion is connected to the end of the first connecting portion facing away from the body portion, the second connecting portion being used for abutting against the side of the first position-limiting portion facing away from the electrode assembly.

In the above technical solution, the first connecting portion abuts against the side of the first position-limiting portion in its protruding direction, and the second connecting portion abuts against the side of the first position-limiting portion facing away from the electrode assembly, which improves the stability of the connection between the connecting portion and the first position-limiting portion, and can also increase the contact area between the second current collecting member and the first position-limiting portion, so as to increase the overcurrent area between the case and the second current collecting member.

In some embodiments of the first aspect of the present application, the first connecting portion extends along the thickness direction.

In the above technical solution, the first connecting portion extends along the thickness direction of the end cover, such that the distance is shortest when the first extension portion extends to abut against the side of the first position-limiting portion that is in its protruding direction, thereby reducing the amount of internal space of the battery cell occupied by the first connecting portion.

In some embodiments of the first aspect of the present application, the first connecting portion is a closed-ring structure extending along a circumferential direction of the case.

In the above technical solution, the first connecting portion is of a closed-ring structure, which can increase the contact area between the first connecting portion and the first position-limiting portion, thereby increasing the overcurrent area between the case and the second current collecting member.

In some embodiments of the first aspect of the present application, the second connecting portion is a closed-ring structure surrounding the edge of the first connecting portion.

In the above-described technical solution, the second connecting portion is of a closed-ring structure, which can increase the contact area between the second connecting portion and the first position-limiting portion, thereby increasing the overcurrent area between the case and the second current collecting member.

In some embodiments of the first aspect of the present application, the first current collecting member and the second current collecting member form a plug-in fit along the thickness direction.

In the above technical solution, the first current collecting member and the second current collecting member form a plug-in fit along the thickness direction of the end cover, which enables plug-in positioning of the first current collecting member and the second current collecting member, thereby enabling improvement of the stability of the relative positional relationship between the first current collecting member and the second current collecting member, and facilitating welding of the first current collecting member and the second current collecting member and improving the stability of the electrical energy output.

In some embodiments of the first aspect of the present application, the first current collecting member is formed with a groove on the side facing the end cover, a part of the second current collecting member being accommodated in the groove.

In the above technical solution, the second current collector is plugged into the groove on the side of the first current collecting member facing the end cover, which not only enables plug-in positioning of the first current collecting member and the second current collecting member, thereby enabling improvement of the stability of the relative positional relationship between the first current collecting member and the second current collecting member, and facilitating welding of the first current collecting member and the second current collecting member and improving the stability of the electrical energy output, but also reduces the amount of space occupied by the first current collecting member and the second current collecting member in the thickness direction of the end cover. It also makes the position where the first current collecting member is provided with the groove have a smaller thickness, which facilitates the welding of the first current collecting member to the tabs.

In some embodiments of the first aspect of the present application, the first current collecting member is provided with a central hole penetrating through the first current collecting member along the thickness direction, and the first current collecting member is formed with a guide groove on the side facing the electrode assembly, the guide groove being configured to guide, towards the outer periphery, electrolyte entering the electrode assembly through the central hole.

In the above technical solution, the guide groove is capable of guiding the electrolyte of the central hole to a region other than the central hole, so that the electrolyte is uniformly distributed inside the battery cell, thereby sufficiently and uniformly infiltrating the electrode assembly and reducing the possibility of lithium precipitation of the battery cell.

In some embodiments of the first aspect of the present application, the case is formed with a first concave portion recessed inwardly from the outer peripheral wall of the case, the case is formed with a first position-limiting portion protruding from the inner peripheral wall of the case at a position corresponding to the first concave portion, and the first concave portion and the first position-limiting portion are both annular structures.

In the above technical solution, forming the first position-limiting portion in the inner wall of the case has a large machining difficulty, while the difficulty of forming the first concave portion in the outer peripheral wall of the case is lower compared to the difficulty of forming the first position-limiting portion directly in the inner peripheral wall of the case; therefore, the difficulty of molding the first position-limiting portion is lowered by forming the first position-limiting portion protruding from the inner peripheral wall of the case at the position of the case that corresponds to the first concave portion.

In some embodiments of the first aspect of the present application, the case has a second position-limiting portion; and in the thickness direction of the end cover, the second position-limiting portion and the first position-limiting portion are used for jointly limiting movement of the end cover relative to the case in the thickness direction.

In the above technical solution, the second position-limiting portion and the first position-limiting portion cooperate to jointly limit movement of the end cover relative to the case in the thickness direction of the end cover, so as to maintain a stable connection relationship between the end cover and the case.

In some embodiments of the first aspect of the present application, the second position-limiting portion is a flanging structure in which the case is folded inward at the opening position.

In the above technical solution, the second position-limiting portion is a flanging structure in which the case is folded inward at the opening position, which means that the second position-limiting portion is a part of the case, so as to enable the second position-limiting portion to stably position-limit the end cover on the side of the end cover facing away from the electrode assembly. Moreover, the second position-limiting portion is a part of the case, which can also reduce the connecting relationship of the case and thus improve the structural strength of the case.

In some embodiments of the first aspect of the present application, the battery cell further includes a sealing member, the sealing member being used between the first position-limiting portion and the end cover and between the second position-limiting portion and the end cover.

In the above technical solution, the sealing performance of the battery cell is improved by means of the sealing member being used between the first position-limiting portion and the end cover and between the second position-limiting portion and the end cover.

In a second aspect, embodiments of the present application provide a battery including a battery cell described in any of the embodiments of the first aspect.

In the above technical solution, the battery cell includes a first current collecting member and a second current collecting member, where the first current collecting member is connected to the tabs, and the second current collecting member connects the first current collecting member and the first position-limiting portion of the case. The first region of the first member can be welded to the tab of an outer ring layer, and the second region of the first member can be welded to the tab of an inner ring layer, so that the tabs of the inner ring layer and the outer ring layer can both be connected to the first current collecting member, which enables uniform current conduction to be realized, so as to avoid the problem of excessive local overcurrent due to the failure of the tab of the outer ring layer to be connected to the current collecting member, thereby reducing the risk of severe polarization of the tab of the outer ring layer in the cyclic charging and discharging process, and thereby reducing the risk of lithium precipitation due to polarization, thus improving the safety performance of the battery.

In a third aspect, embodiments of the present application provide an electrical device, including a battery provided by any one of the embodiments of the second aspect.

In the above technical solution, the battery does not have the problem of local overcurrent due to the failure of the outer ring tab to be connected to the current collecting member, thereby reducing the risk of severe polarization of the outer ring tab in the cyclic charging and discharging process, and thereby reducing the risk of lithium precipitation, thus improving the electrical safety in the electrical device.

In a fourth aspect, embodiments of the present application provide a manufacturing device for a battery cell, including a providing apparatus and an assembling apparatus, the providing apparatus being configured to provide an electrode assembly, a case, an end cover, a first current collecting member, and a second current collecting member, where the electrode assembly has tabs; the case has an opening, the case is used for accommodating the electrode assembly, and the case is provided with a first position-limiting portion protruding from the inner side face, the first position-limiting portion being used for limiting movement of the end cover towards a direction close to the electrode assembly; and the end cover is used for covering the opening; and the assembling apparatus is configured to accommodate the electrode assembly within the case, to connect the first current collecting member to the tabs, to connect the second current collecting member to the first current collecting member and the first position-limiting portion, and to cover the opening with the end cover, where the first current collecting member includes a first region overlapping with the first position-limiting portion along a thickness direction of the end cover and a second region not overlapping with the first position-limiting portion along the thickness direction, the first region and the second region both being welded to the tabs.

In a fifth aspect, embodiments of the present application provide a manufacturing method for a battery cell, the manufacturing method including:
providing an electrode assembly, a case, an end cover, a first current collecting member, and a second current collecting member, wherein the electrode assembly has tabs; and the case has an opening, the case is used for accommodating the electrode assembly, and the case is provided with a first position-limiting portion protruding from the inner side face, the first position-limiting portion being used for limiting movement of the end cover towards a direction close to the electrode assembly;
connecting the first current collecting member to the tabs;
connecting the second current collecting member to the first current collecting member;
accommodating the electrode assembly within the case and connecting the second current collecting member to the first position-limiting portion; and
covering the opening with the end cover,
wherein the first current collecting member comprises a first region overlapping with the first position-limiting portion along a thickness direction of the end cover and a second region not overlapping with the first position-limiting portion along the thickness direction, the first region and the second region both being welded to the tabs.

### DESCRIPTION OF DRAWINGS

To more clearly describe the technical solutions of the embodiments of the present application, the drawings to be used in the embodiments will be briefly introduced below, and it should be understood that the following drawings only show some embodiments of the present application, and therefore should not be considered as limiting the scope of the present application. For those of ordinary skills in the art, other relevant drawings may also be obtained based on these drawings without creative efforts.
FIG. 1 is a structural schematic diagram of a vehicle provided in some embodiments of the present application;
FIG. 2 is a structural schematic diagram of a battery provided in some embodiments of the present application;
FIG. 3 is a structural schematic diagram of a battery cell provided in some embodiments of the present application;
FIG. 4 is a cross-sectional view of FIG. 3;
FIG. 5 is an enlarged view at I in FIG. 4;
FIG. 6 is an axonometric view of a second current collecting member provided in some embodiments of the present application;
FIG. 7 is a cross-sectional view of the second current collecting member in FIG. 6;
FIG. 8 is a cross-sectional view of a battery cell provided in some other embodiments of the present application;
FIG. 9 is an enlarged view at II in FIG. 8;
FIG. 10 is a structural schematic diagram of a second current collecting member provided in some other embodiments of the present application;
FIG. 11 is a cross-sectional view of the second current collecting member in FIG. 10;
FIG. 12 is a schematic diagram of a plug-in fit of a first current collecting member and a second current collecting member provided in some embodiments of the present application;
FIG. 13 is a schematic diagram of a plug-in fit of a first current collecting member and a second current collecting member provided in some other embodiments of the present application;
FIG. 14 is a structural schematic diagram of a first current collector provided in some embodiments of the present application;
FIG. 15 is a structural schematic diagram of an electrode assembly provided in some embodiments of the present application;
FIG. 16 is a schematic diagram of a tab of an electrode assembly and a first current collecting member after being welded as provided in some embodiments of the present application;
FIG. 17 is a structural schematic diagram of a manufacturing device for a battery cell provided in some embodiments of the present application; and
FIG. 18 is a flow block diagram of a manufacturing method for a battery cell provided in some embodiments of the present application.

Reference numerals: 1000 - vehicle; 100 - battery; 10 - box body; 11 - mounting space; 12 - first part; 13 - second part; 20 - battery cell; 21 - electrode assembly; 211 - tab; 212 - recessed portion; 213 - first weld mark region; 22 - case; 221 - opening; 222 - first position-limiting portion; 2221 - first connecting segment; 2222 - second connecting segment; 2223 - third connecting segment; 223 - first concave portion; 224 - second position-limiting portion; 23 - end cover; 231 - pressure relief mechanism; 24 - first current collecting member; 241 - first region; 242 - second region; 243 - groove; 244 - central hole; 245 - guide groove; 246 - second weld mark region; 25 - second current collecting member; 251 - body portion; 2511 - first body portion; 2512 - second body portion; 2513 - through hole; 252 - connecting portion; 2521 - first connecting portion; 2522 - second connecting portion; 26 - electrode terminal; 27 - sealing member; 271 - first sealing portion; 272 - second sealing portion; 273 - third sealing portion; 200 - controller; 300 - motor; 2000 - manufacturing device for battery cell; 2100 - providing apparatus; 2200 - assembling apparatus; X - thickness direction of end cover.

### DETAILED DESCRIPTION

For the objects, technical solutions and advantages of the embodiments of the present application to be clearer, the technical solutions in the embodiments of the present application will be clearly and completely described below in conjunction with the drawings in the embodiments of the present application, and it is apparent that the described embodiments are a part of the examples of the present application rather than all the embodiments. The assembly of the examples of the present application generally described and illustrated in the drawings herein can be arranged and designed in a variety of different configurations.

Accordingly, the following detailed description of the embodiments of the present application provided in the accompanying drawings is not intended to limit the scope of the present application for which protection is claimed, but merely to indicate selected embodiments of the present application. All the other embodiments obtained by a person of ordinary skill in the art based on the embodiments of the present application without any creative effort shall fall within the scope of protection of the present application.

It should be noted that, without conflict, embodiments in the present application and features in the embodiments may be combined together.

It should be noted that similar reference numerals and letters denote similar items in the following drawings, and therefore, once an item is defined in one drawing, further definition and explanation thereof is not required in subsequent drawings.

In the description of the embodiments of the present application, it should be noted that the orientation or positional relationship is indicated as being based on the orientation or positional relationship shown in the accompanying drawings, or the orientation or positional relationship in which the product of the present application is customarily placed in use, or as customarily understood by those skilled in the art, solely for the purpose of facilitating the description of the present application and simplifying the description, but do not indicate or imply that the apparatuses or elements referred to must have a particular orientation, be constructed and operate in a particular orientation, and therefore cannot be construed as a limitation of the present application. In addition, the terms "first", "second" and "third" are only used to distinguish the description, and cannot be construed as indicating or implying relative importance.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of the power batteries, the market demand is also constantly expanding.

In the prior art, the battery cell includes an electrode assembly, a case, an end cover, and a current collecting member. The electrode assembly is accommodated within the case, and the case is provided with a first position-limiting portion protruding from the inner side face, the first position-limiting portion being used for limiting movement of the end cover along a thickness direction thereof towards a direction close to the electrode assembly when the end cover covers the opening of the case. The current collecting member is provided on the side of the tab facing the end cover. The current collecting member includes a first current collecting portion and a second current collecting portion, where the first current collecting portion is used for welding to the tab, and the second current collecting portion is connected to the first current collecting portion and extends in the thickness direction of the end cover towards a direction close to the end cover until it abuts against an inner side face of the first position-limiting portion along a protruding arrangement direction thereof to realize an electrical connection of this tab with the first position-limiting portion via the current collecting member.

The inventors have found that since the second current collecting portion is abutted against the inner side face of the first position-limiting portion along the protruding arrangement direction thereof, the size of the part of the first current collecting portion which is on the outer side of the second current collecting portion is very small or even non-existent, resulting in failure of the part of this tab which is located on the outer side of the second current collecting portion to be welded to the first current collecting portion; or the tab is a kneaded flat tab, and the tab on the outer side of the second current collecting portion has a large slope, resulting in failure of that part of the tab to be welded to the first current collecting portion, which can easily lead to the problem of excessive local overcurrent due to the failure of the part of the tab to be connected to the current collecting member, and cause a severe polarization of the unwelded side of the tab in the cyclic charging and discharging process, or even worse, lead to lithium precipitation on the tab side, which seriously affects the safety performance of the battery cell.

Based on the above considerations, in order to alleviate the problem of severe polarization of the tab of the outer ring layer in the cyclic charging and discharging process caused by excessive local overcurrent produced due to the failure of the tab of the outer ring layer to be welded to the current collecting member, embodiments of the present application provide a battery cell, the battery cell including a first current collecting member and a second current collecting member provided in a split manner, where the first current collecting member is used for connecting to the tabs of the electrode assembly, and the first current collecting member and the first position-limiting portion are connected via a second current collecting member; and the first current collecting member includes a first region overlapping with the first position-limiting portion along the thickness direction of the end cover and a second region not overlapping with the first position-limiting portion along the thickness direction of the end cover, the first region and the second region both being welded to the tabs, where the first region can be welded to the tab of the outer ring layer, and the second region can be welded to the tab of the inner ring layer, so that the tab of the inner ring layer and the tab of the outer ring layer can both be connected to the first current collecting member, which enables uniform current conduction to be realized, so as to avoid the problem of excessive local overcurrent due to the failure of the tab of the outer ring layer to be connected to the current collecting member, thereby reducing the risk of severe polarization of the tab of the outer ring layer in the cyclic charging and discharging process, and thereby reducing the risk of lithium precipitation due to polarization. In addition, since the first current collecting member and the second current collecting member are provided in a split manner, it is possible to first connect the first current collecting member to the tab without being restricted by the structure of the case, and then connect the first current collecting member to the first position-limiting portion 222 of the case by the second current collecting member, thereby conveniently realizing the connection of the electrode assembly and the case.

The battery cells disclosed in embodiments of the present application can be used in, but are not limited to, an electrical apparatus, such as a vehicle, a ship, or an aircraft. A battery, or the like, that has the battery cell disclosed in the present application may be used to form a power supply system for such an electrical apparatus. In this way, it is beneficial to alleviate the problem of severe polarization of the tab of the outer ring layer in the cyclic charging and discharging process caused by excessive local overcurrent due to the failure of the tab of the outer ring layer to be welded to the current collecting member, thereby reducing the risk of lithium precipitation of the battery cell, and improving the safety performance of the battery cell.

The technical solutions described in embodiments of the present application are applicable to the battery and an electrical device using the battery.

The electrical device may be a vehicle, a mobile phone, a portable device, a laptop, a ship, a spacecraft, an electric toy, an electric tool, etc. The vehicle may be a fuel vehicle, a gas vehicle or a new energy vehicle. The new energy vehicle may be an all-electric vehicle, a hybrid electric vehicle, an extended-range vehicle, or the like. The spacecraft includes airplanes, rockets, space shuttles, spaceships, and the like. The electric toy includes fixed or mobile electric toys, such as game consoles, electric car toys, electric ship toys and electric aircraft toys. The electric tool includes metal cutting electric tools, grinding electric tools, assembly electric tools and railway electric tools, such as electric drills, electric grinders, electric wrenches, electric screwdrivers, electric hammers, impact drills, concrete vibrators and electric planers. Embodiments of the present application do not impose special limitations on the above electrical device.

For the convenience of illustration, the following embodiments are illustrated with the electrical device being a vehicle 1000 as an example.

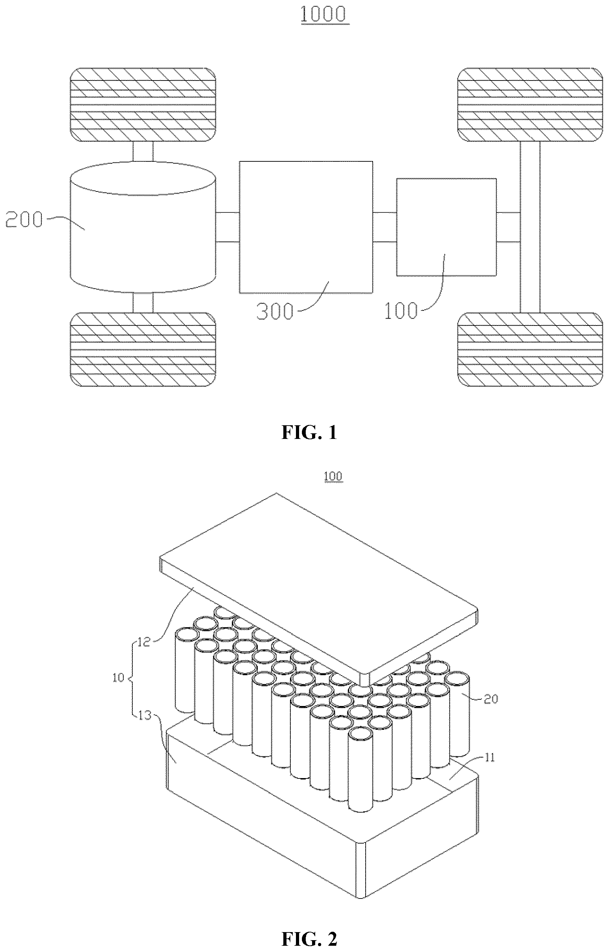

Referring to FIG. 1, FIG. 1 is a structural schematic diagram of a vehicle 1000 according to some embodiments of the present application. The interior of the vehicle 1000 is provided with a battery 100, and the battery 100 may be provided at the bottom or head or tail of the vehicle 1000. The battery 100 may be used to supply power to the vehicle 1000. For example, the battery 100 may be used as an operating power source of the vehicle 1000.

The vehicle 1000 may further include a controller 200 and a motor 300. The controller 200 is used to control the battery 100 to supply power to the motor 300, for example, for the operating power demand when the vehicle 1000 is starting, navigating and driving.

In some embodiments of the present application, the battery 100 can not only be used as the operating power source of the vehicle 1000, but also be used as a driving power source of the vehicle 1000 to replace or partially replace fuel or natural gas to provide driving power for the vehicle 1000.

Please refer to FIG. 2. FIG. 2 is a structural schematic diagram of a battery 100 provided according to some embodiments of the present application. The battery 100 includes a box body 10 and a battery cell 20, the battery cell 20 being accommodated in the box body 10.

The box body 10 is used to provide a mounting space 11 for the battery cell 20. In some embodiments, the box body 10 may include a first part 12 and a second part 13, the first part 12 and the second part 13 covering each other to define the mounting space 11 for accommodating the battery cell 20. Of course, the connection between the first part 12 and the second part 13 may be sealed by a sealing member 27 (not shown), where the sealing member 27 may be a sealing ring, a sealant, or the like.

The first part 12 and the second part 13 may be of a variety of shapes, such as a rectangular solid, a cylinder, or the like. The first part 12 may be of a hollow structure that has an opening 221 on one side to form an accommodation cavity, and the second part 13 may also be of a hollow structure that has an opening 221 on one side to form an accommodation cavity, and the opening side of the second part 13 covers the opening side of the first part 12 to form the box body 10 having the mounting space 11. Of course, alternatively, the first part 12 may be of a hollow structure that has an opening 221 on one side to form an accommodation cavity, and the second part 13 may be of a plate-like structure, and the second part 13 covers the opening side of the first part 12 to form the box body 10 with the mounting space 11.

There may be one or more battery cell 20 in a battery 100. If there are multiple battery cells 20, the multiple battery cells 20 can be connected in series or parallel or in a mixed connection, where the mixed connection means that the multiple battery cells 20 are connected in both series and parallel. The multiple battery cells 20 can be directly connected together in series or in parallel or in mixed connection, and then the whole composed of the multiple battery cells 20 can be accommodated in the box body 10; and of course, the multiple battery cells 20 can be connected in series or in parallel or in mixed connection to form a battery module first, then multiple battery modules can be connected in series or in parallel or in mixed connection to form a whole, and accommodated in the box body 10. The battery cells 20 may be cylindrical, flat, rectangular, or in other shapes. FIG. 2 exemplarily illustrates a situation where the battery cell 20 is cylindrical.

In some embodiments, the battery 100 may also include a busbar component (not shown), and the multiple battery cells 20 may be electrically connected through the busbar component, so as to realize series, parallel or mixed connection of the multiple battery cells 20.

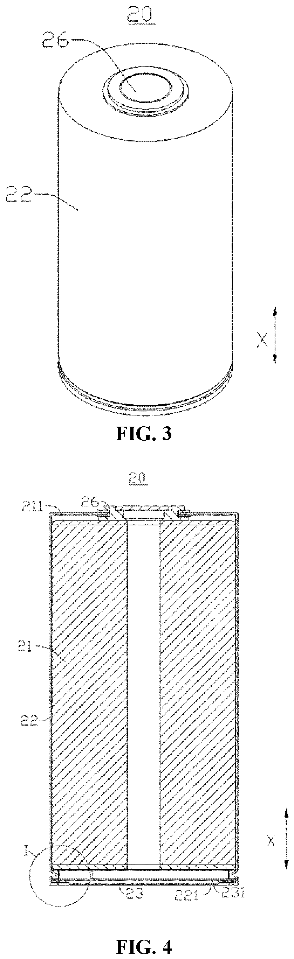

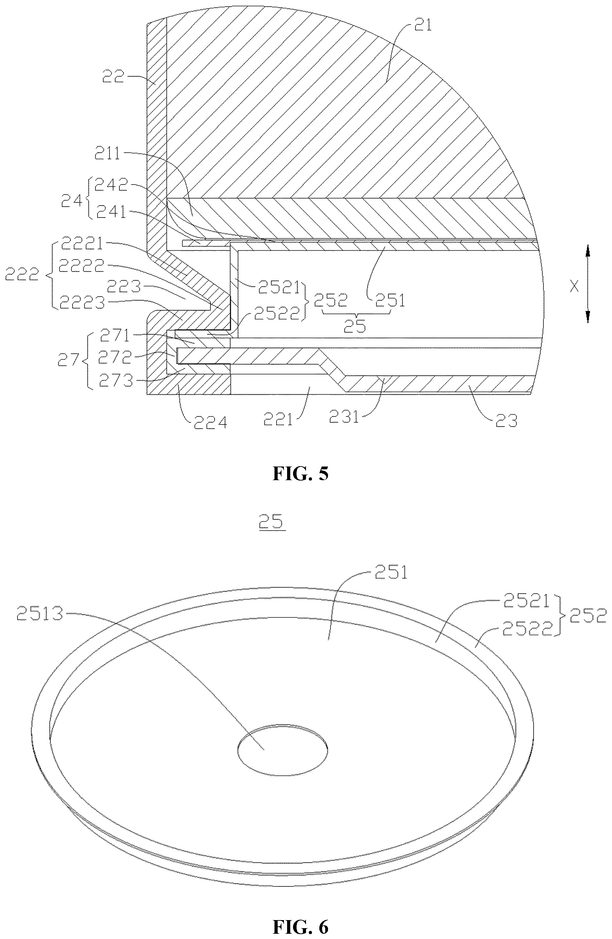

Referring to FIGS. 3, 4, and 5, where FIG. 3 is a structural schematic diagram of a battery cell 20 provided in some embodiments of the present application, FIG. 4 is a cross-sectional view of FIG. 3, and FIG. 5 is an enlarged view at I in FIG. 4. The battery cell 20 may include an electrode assembly 21, a case 22, an end cover 23, a first current collecting member 24, and a second current collecting member 25, where the electrode assembly 21 has tabs 211; the case 22 has an opening 221, the case 22 being used for accommodating the electrode assembly 21, and the case 22 being provided with a first position-limiting portion 222 protruding from the inner side face; the end cover 23 is used for covering the opening 221, the first position-limiting portion 222 being used for limiting movement of the end cover 23 towards a direction close to the electrode assembly 21; the first current collecting member 24 is disposed on the side of the first position-limiting portion 222 facing the electrode assembly 21 along a thickness direction X of the end cover, the first current collecting member 24 being used for connecting the tabs 211; and the second current collecting member 25 is disposed on the side of the first current collecting member 24 facing away from the electrode assembly 21 along the thickness direction, the second current collecting member 25 being used for connecting the first current collecting member 24 and the first position-limiting portion 222, where the first current collecting member 24 includes a first region 241 overlapping with the first position-limiting portion 222 along the thickness direction and a second region 242 not overlapping with the first position-limiting portion 222 along the thickness direction, the first region 241 and the second region 242 both being welded to the tabs 211.

The case 22 may be of a variety of shapes, such as a cylinder, a rectangular solid, or the like. The shape of the case 22 may be determined according to the specific shape of the electrode assembly 21. For example, if the electrode assembly 21 is of a cylindrical structure, the case 22 may be of a cylindrical structure; and if the electrode assembly 21 is of a rectangular structure, the case 22 may be of a rectangular structure. FIG. 3 exemplarily illustrates a situation where the case 22 and the electrode assembly 21 are cylindrical.

The case 22 may also be made of a variety of materials, such as copper, iron, aluminum, stainless steel, and aluminum alloy, which is not particularly limited in the embodiments of the present application.

For the thickness direction X of the end cover mentioned in the embodiments of the present application, if the battery cell 20 is of a cylindrical structure, the thickness direction X of the end cover is also the axial direction of the battery cell 20. The first position-limiting portion 222 has a protruding arrangement direction perpendicular to the thickness direction X of the end cover.

The end cover 23 is used to cover the opening 221 of the case 22 to form a closed accommodation space (not shown), the accommodation space being used to accommodate the electrode assembly 21. The accommodation space is also used to accommodate an electrolyte, such as an electrolyte solution.

It is noted that the number of the opening 221 of the case 22 may be one or two. If the number of the opening 221 of the case 22 is one, the number of the end cover 23 may also be one, and there may be one electrode terminal 26 provided in the end cover 23, where the electrode terminal 26 is electrically connected to one of the positive tab and the negative tab of the electrode assembly 21, and the other of the positive tab and the negative tab is electrically connected to the case 22. The end cover 23 and the case 22 may be insulatively connected.

As shown in FIG. 3, in some embodiments, the positive tab and the negative tab of the electrode assembly 21 are disposed at two opposite ends of the battery cell 20 in the axial direction, respectively. The number of the openings 221 of the case 22 is two, and the two openings 221 are disposed at two ends of the case 22 in the axial direction, respectively, the end cover 23 covering one of the openings 221, and the other opening 221 allowing the electrode terminal 26 to pass through to be electrically connected to the tabs 211. Among other things, the electrode terminal 26 and the tab 211 are connected via the current collecting member to realize the electrical connection between the electrode terminal 26 and the tab 211.

As shown in FIG. 5, the end cover 23 may also be provided with a pressure relief mechanism 231, the pressure relief mechanism 231 being used to be actuated to relieve the internal pressure or temperature of the battery cell 20 when the pressure or temperature inside the battery cell 20 reaches a threshold. The threshold design varies according to different design requirements. The threshold may depend on the material of one or more of the positive electrode plate, the negative electrode plate, the electrolyte, and the separator in the battery cell 20. The pressure relief mechanism 231 may take the form of, for example, an explosion-proof valve, an explosion-proof sheet, an air valve, a pressure relief valve, or a safety valve, and may specifically employ a pressure-sensitive or temperature-sensitive element or construction. That is to say, when the internal pressure or temperature of the battery cell 20 reaches a predetermined threshold, the pressure relief mechanism 231 performs an action, or a weak structure provided in the pressure relief mechanism 231 is broken, so as to form an opening 221 or channel through which the internal pressure or temperature can be relieved. FIG. 5 illustrates the situation where the pressure relief mechanism 231 is a weak portion formed on the end cover 23 by means of indentations or the like.

The electrode assembly 21 may include a positive electrode plate (not shown), a negative electrode plate (not shown), and a separator (not shown). The electrode assembly 21 may be a wound structure formed by winding the positive electrode plate, the separator, and the negative electrode plate, or may be a laminated structure formed by laminated arrangement of the positive electrode plate, the separator, and the negative electrode plate. The electrode assembly 21 further includes a positive tab and a negative tab, where the positive electrode current collector in the positive electrode plate that is not coated with the positive electrode active material layer can be used as the positive tab, and the negative electrode current collector in the negative electrode plate that is not coated with the negative electrode active material layer can be used as the negative tab.

The first current collecting member 24 is used to connect the tab 211, and this tab 211 may be a positive tab or a negative tab, which means that it may be a positive tab of the first current collecting member 24 for connecting the electrode assembly 21 or a negative tab of the first current collecting member 24 for connecting the electrode assembly 21. If it is the positive tab of the first current collecting member 24 that is used for connecting the electrode assembly 21, after the second current collecting member 25 connects the first current collecting member 24 and the first position-limiting portion 222, an electrical connection is realized between the case 22 and the positive tab of the electrode assembly 21, then the case 22 serves as the positive electrode output end of the battery cell 20, and the electrode terminal 26 at the other end of the case 22 is electrically connected to the negative tab of the electrode assembly 21 to form the negative electrode output end of the battery cell 20. If it is the negative tab of the first current collecting member 24 that is used for connecting the electrode assembly 21, after the second current collecting member 25 connects the first current collecting member 24 and the first position-limiting portion 222, an electrical connection is realized between the case 22 and the negative tab of the electrode assembly 21, then the case 22 serves as the negative electrode output end of the battery cell 20, and the electrode terminal 26 at the other end of the case 22 is electrically connected to the positive tab of the electrode assembly 21 to form the positive electrode output end of the battery cell 20.

Along the thickness direction X of the end cover, the tab 211 has a first tab 211 region (an outer ring layer tab 211) overlapping with the first region 241 and a second tab 211 region (an inner ring layer tab 211) overlapping with the second region 242. If the first region 241 of the first current collecting member 24 is of a closed-ring structure surrounding the outer periphery of the second region 242, then along the circumferential direction of the battery cell 20, the first region 241 can be welded to the first tab 211 region at any position and the second region 242 can be welded to the second tab 211 region at any position.

The second current collecting member may be welded to, bonded to, or abutted against the first position-limiting portion 222, thereby effecting an electrical connection of the tab 211 to the case 22 via the first current collecting member 24 and the second current collecting member 25.

The first connecting member includes a first region 241 overlapping with the first position-limiting portion 222 along the thickness direction X of the end cover and a second region 242 not overlapping with the first position-limiting portion 222 along the thickness direction X of the end cover, where the first region 241 can be welded to the tab 211 of an outer ring layer, and the second region 242 can be welded to the tab 211 of an inner ring layer, so that the tabs 211 of the inner ring layer and the outer ring layer can both be connected to the first current collecting member 24, which enables uniform current conduction to be realized, so as to avoid the problem of excessive local overcurrent due to the failure of the tab 211 of the outer ring layer to be connected to the current collecting member, thereby reducing the risk of severe polarization of the tab 211 of the outer ring layer in the cyclic charging and discharging process, and thereby reducing the risk of lithium precipitation due to polarization. In addition, since the first current collecting member 24 and the second current collecting member 25 are provided in a split manner, it is possible to first connect the first current collecting member 24 to the tab 211 without being restricted by the structure of the case 22, and then connect the first current collecting member 24 to the first position-limiting portion 222 of the case 22 by the second current collecting member 25, thereby conveniently realizing the connection of the electrode assembly 21 and the case 22.

Referring to FIG. 5, in some embodiments, the second current collecting member 25 includes a body portion 251 and a connecting portion 252, where the body portion 251 is stacked with the first current collecting member 24 along the thickness direction, the body portion 251 being used for connecting the side of the first current collecting member 24 facing away from the electrode assembly 21; and the connecting portion 252 is connected to the body portion 251, a part of the connecting portion 252 extending to the side of the first position-limiting portion 222 in its protruding direction to effect a connection between the first current collecting member 24 and the first position-limiting portion 222.

The body portion 251 and the connecting portion 252 may be integrally molded. The body portion 251 and the connecting portion 252 may also be provided in a split manner and connected as an integral structure by means of a connection method such as welding, bonding, or the like.

In this embodiment, the thickness direction refers to the thickness direction X of the end cover. The body portion 251 is stacked with the first current collecting member 24 along the thickness direction, where along the thickness direction X of the end cover, the projection of the body portion 251 may completely overlap with the second region 242 of the first current collecting member 24. In some other embodiments, along the thickness direction X of the end cover, a part of the projection of the body portion 251 may overlap with the first region 241 of the first current collecting member 24, and the other part of the projection of the body portion 251 may overlap with the first region 241.

The side of the first position-limiting portion 222 along the protruding direction thereof is the innermost side of the first position-limiting portion 222. A part of the connecting portion 252 may be welded to, bonded to, or abutted against the innermost side of the first position-limiting portion 222 to realize the connection of the second current collecting member 25 with the first position-limiting portion 222.

The body portion 251 is stacked with the first current collecting member 24 along the thickness direction and is electrically connected to the first current collecting member 24, which can improve the current conduction capability of the battery cell 20. A part of the connecting portion 252 extends to the side of the first position-limiting portion 222 in its protruding direction, thereby effecting a connection between the first current collecting member 24 and the first position-limiting portion 222, which increases the contact area between the second current collecting member 25 and the first position-limiting portion 222, so as to increase the overcurrent area between the case 22 and the second current collecting member 25.

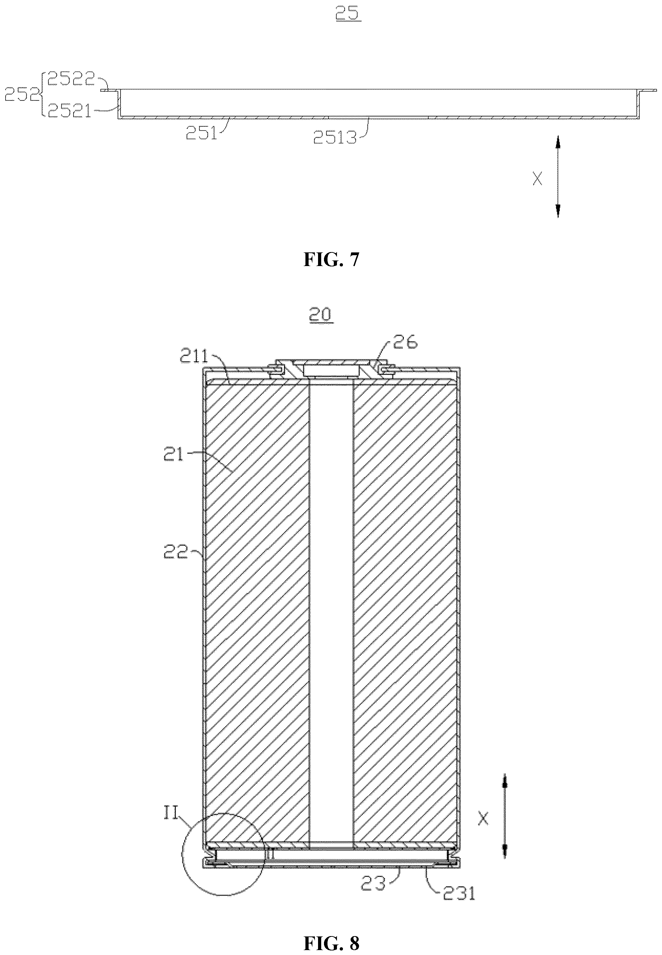

Referring in combination to FIGS. 5, 6, and 7, where FIG. 6 is an axonometric view of a second current collecting member 25 provided in some embodiments of the present application, and FIG. 7 is a cross-sectional view of the second current collecting member 25 in FIG. 6. In some embodiments, the connecting portion 252 includes a first connecting portion 2521 and a second connecting portion 2522, where the first connecting portion 2521 is used to abut against the side of the first position-limiting portion 222 in its protruding direction; and the second connecting portion 2522 is connected to the end of the first connecting portion 2521 facing away from the body portion 251, and the second connecting portion 2522 is used to abut against the side of the first position-limiting portion 222 facing away from the electrode assembly 21.

The first connecting portion 2521 is a part of the body portion 251 that extends towards the interior of the first position-limiting portion 222, and the first connecting portion 2521 may be leaning against or welded to the innermost side of the first position-limiting portion 222 to effect abutment. The second connecting portion 2522 is a part that extends from the end of the first connecting portion 2521 facing away from the body portion 251 to the side of the first position-limiting portion 222 facing away from the electrode assembly 21. The second connecting portion 2522 may be welded to or abutted against the first position-limiting portion 222. The second position-limiting portion 224 is abutted against the side of the first position-limiting portion 222 that faces away from the electrode assembly 21 such that the connecting portion 252 is hooked up to the first position-limiting portion 222. By way of example, the first connecting portion 2521 is of a cylindrical structure, and the second connecting portion 2522 is of an annular structure provided at the end of the first connecting portion 2521 far from the body portion 251. The second connecting portion 2522 may be welded to the first position-limiting portion 222 by means of penetration welding.

The first connecting portion 2521 and the second connecting portion 2522 may be integrally molded. For example, the second connecting portion 2522 is a flanging structure formed by means of the connecting portion 252 being bent. The first connecting portion 2521 and the second connecting portion 2522 may also be provided in a split manner and connected as an integral structure by means of a connection method such as welding, bonding, or the like.

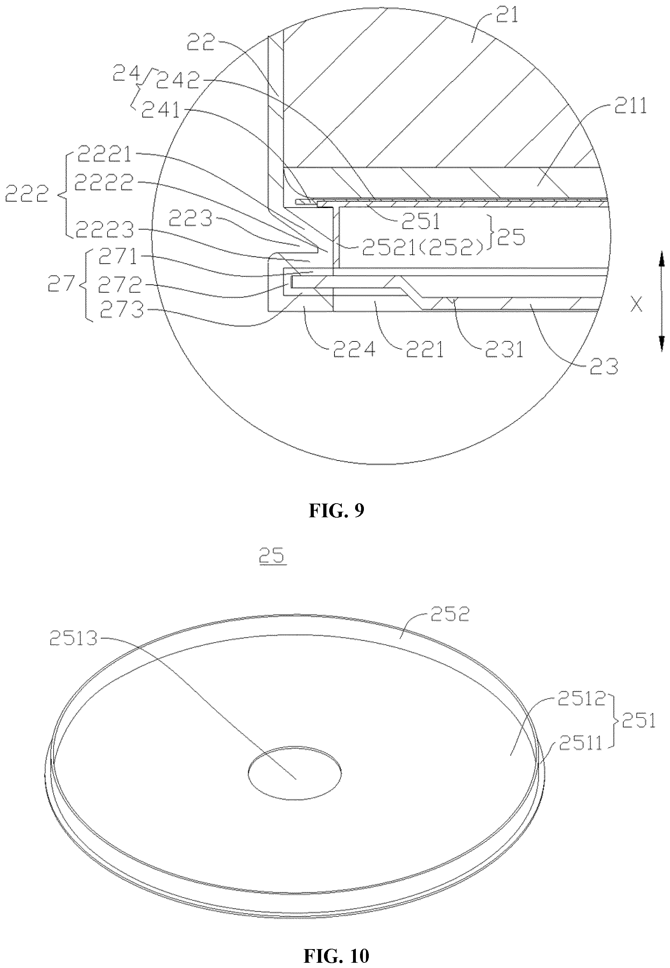

As shown in FIGS. 8 and 9, FIG. 8 is a cross-sectional view of a battery cell 20 provided in some other embodiments of the present application, and FIG. 9 is an enlarged view at II in FIG. 8. In some other embodiments, the connecting portion 252 may also include only the first connecting portion 2521. Alternatively, the connecting portion 252 includes a first connecting portion 2521 and a second connecting portion 2522, where the first connecting portion 2521 is not abutted against the first position-limiting portion 222 and the second connecting portion 2522 is abutted against the side of the first position-limiting portion 222 that faces away from the electrode assembly 21.

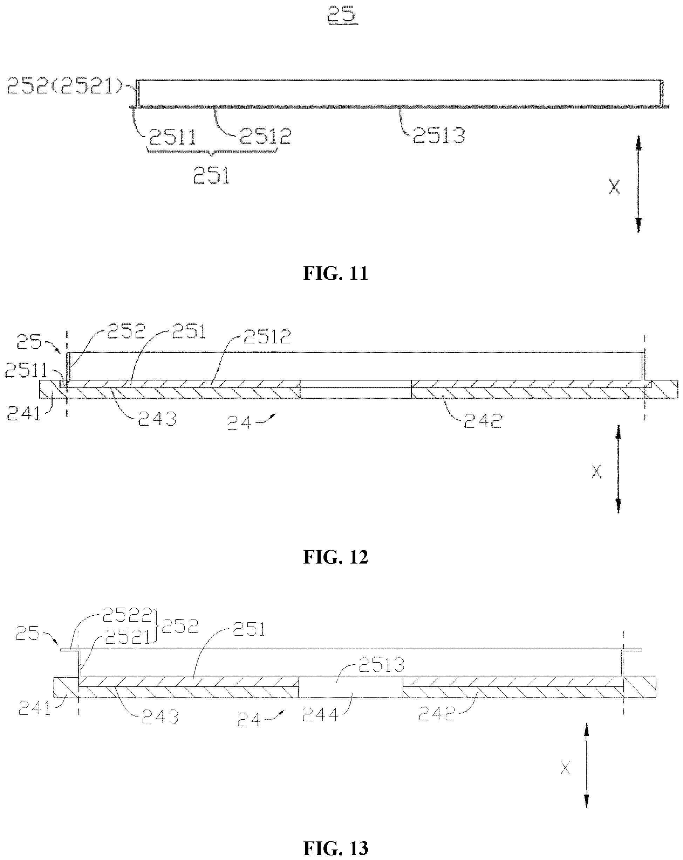

Referring in combination to FIGS. 9, 10, and 11, where FIG. 10 is a structural schematic diagram of a second current collecting member 25 provided in some other embodiments of the present application, and FIG. 11 is a cross-sectional view of the second current collecting member 25 in FIG. 10. In some embodiments, the edge of the body portion 251 may be radially beyond the outer peripheral face of the first connecting portion 2521 such that the body portion 251 includes a first body portion 2511 that surrounds the outer periphery of the first connecting portion 2521 and a second body portion 2512 that is disposed within the first connecting portion 2521, where along the thickness direction X of the end cover, the projection of the first body portion 2511 overlaps with the first region 241 of the first current collecting member 24, and the projection of the second body portion 2512 overlaps with the second region 242 of the first current collecting member 24 so that a part of the projection of the body portion 251 along the thickness direction X of the end cover overlaps with the first region 241 of the first current collecting member 24, and the other part of the projection of the body portion 251 may overlap with the first region 241.

The first connecting portion 2521 abuts against the side of the first position-limiting portion 222 in its protruding direction, and the second connecting portion 2522 abuts against the side of the first position-limiting portion 222 facing away from the electrode assembly 21, which improves the stability of the connection between the connecting portion 252 and the first position-limiting portion 222, and can also increase the contact area between the second current collecting member 25 and the first position-limiting portion 222, so as to increase the overcurrent area between the case 22 and the second current collecting member 25.

In some embodiments, the first connecting portion 2521 extends along the thickness direction (please refer to FIGS. 5 and 9).

The first connecting portion 2521 is perpendicularly connected to the body portion 251. In some other embodiments, the first connecting portion 2521 may also extend in other directions. For example, the first connecting portion 2521 is arranged at an acute angle to the body portion 251, then the first connecting portion 2521 extends along a direction that is at an acute angle to the thickness direction X of the end cover until it abuts against the innermost side face of the first position-limiting portion 222, or the first connecting portion 2521 is bent with a certain curvature and then abuts against the first position-limiting portion 222.

The first connecting portion 2521 extends along the thickness direction X of the end cover, such that the distance is shortest when the first extension portion extends to abut against the side of the first position-limiting portion 222 that is in its protruding direction, thereby reducing the amount of internal space of the battery cell 20 occupied by the first connecting portion 2521.

Referring to FIG. 6, in some embodiments, the first connecting portion 2521 is a closed-ring structure extending along a circumferential direction of the case 22.

By way of example, the first connecting portion 2521 is of a cylindrical structure, and the first connecting portion 2521 is arranged coaxially with the electrode assembly 21. The second connecting portion 2522 is connected to the end of the first connecting portion 2521 facing away from the body portion 251, and the first connecting portion 2521 is beyond the outer peripheral face of the first connecting portion 2521 in a direction perpendicular to the axial direction of the first connecting portion 2521 and extends to the side of the first position-limiting portion 222 facing away from the electrode assembly 21. Among other things, the outer peripheral face of the first connecting portion 2521 is a surface of the first connecting portion 2521 that is radially far from its central axis.

In other embodiments, the first connecting portion 2521 may also be of a non-closed-ring structure, for example, the first connecting portion 2521 is C-shaped.

The first connecting portion 2521 is of a closed-ring structure, which can increase the contact area between the first connecting portion 2521 and the first position-limiting portion 222, thereby increasing the overcurrent area between the case 22 and the second current collecting member 25.

With continued reference to FIG. 6, in some embodiments, the second connecting portion 2522 is of a closed-ring structure that surrounds the edge of the first connecting portion 2521.

In some other embodiments, the second connecting portion 2522 may also be of a non-closed-ring structure, for example, the second connecting portion 2522 is C-shaped.

The second connecting portion 2522 is of a closed-ring structure, which can increase the contact area between the second connecting portion 2522 and the first position-limiting portion 222, thereby increasing the overcurrent area between the case 22 and the second current collecting member 25.

As shown in FIGS. 12 and 13, FIG. 12 is a schematic diagram of a plug-in fit of the first current collecting member 24 and the second current collecting member 25 provided in some embodiments of the present application, and FIG. 13 is a schematic diagram of a plug-in fit of the first current collecting member 24 and the second current collecting member 25 provided in some other embodiments of the present application. In some embodiments, the first current collecting member 24 and the second current collecting member 25 form a plug-in fit along the thickness direction.

In order to cause the first current collecting member 24 and the second current collecting member 25 to form a plug-in fit, one of the first current collecting member 24 and the second current collecting member 25 is provided with a groove 243, and the other of the first current collecting member 24 and the second current collecting member 25 may be provided with a protrusion that is capable of being inserted within the groove 243. The groove 243 and the protrusion form a plug-in positioning fit.

The first current collecting member 24 and the second current collecting member 25 form a plug-in fit along the thickness direction X of the end cover, which enables plug-in positioning of the first current collecting member 24 and the second current collecting member 25, thereby enabling improvement of the stability of the relative positional relationship between the first current collecting member 24 and the second current collecting member 25, and facilitating welding of the first current collecting member 24 and the second current collecting member 25 and improving the stability of the electrical energy output.

With continued reference to FIGS. 12 and 13, in some embodiments, the first current collecting member 24 is formed with a groove 243 on the side facing the end cover 23, a part of the second current collecting member 25 being accommodated in the groove 243.

A part of the second current collecting member 25 being accommodated in the groove 243 may refer to a part or the whole of the body portion 251 of the second current collecting member 25 in the thickness direction X of the end cover being accommodated in the groove 243, or it may refer to the whole of the body portion 251 of the second current collecting member 25 and a part of the connecting portion 252 being accommodated in the groove 243. The inner diameter of the groove 243 is consistent with the outer diameter of the body portion 251.

In some other embodiments, alternatively, a protrusion that fits into the groove 243 on the first current collecting member 24 may be provided separately on the second current collecting member 25, with the second current collecting member 25 itself being disposed outside of the groove 243.

In some other embodiments, the groove 243 may also be provided on the side of the body portion 251 of the second current collecting member 25 facing the first current collecting member 24, and part or the whole of the second current collecting member 25 is accommodated within the groove 243.

The second current collector is plugged into the groove 243 on the side of the first current collecting member 24 facing the end cover 23, which not only enables plug-in positioning of the first current collecting member 24 and the second current collecting member 25, thereby enabling improvement of the stability of the relative positional relationship between the first current collecting member 24 and the second current collecting member 25, and facilitating welding of the first current collecting member 24 and the second current collecting member 25 and improving the stability of the electrical energy output, but also reduces the amount of space occupied by the first current collecting member 24 and the second current collecting member 25 in the thickness direction X of the end cover. It also makes the position where the first current collecting member 24 is provided with the groove 243 have a smaller thickness, which facilitates the welding of the first current collecting member 24 to the tabs 211.

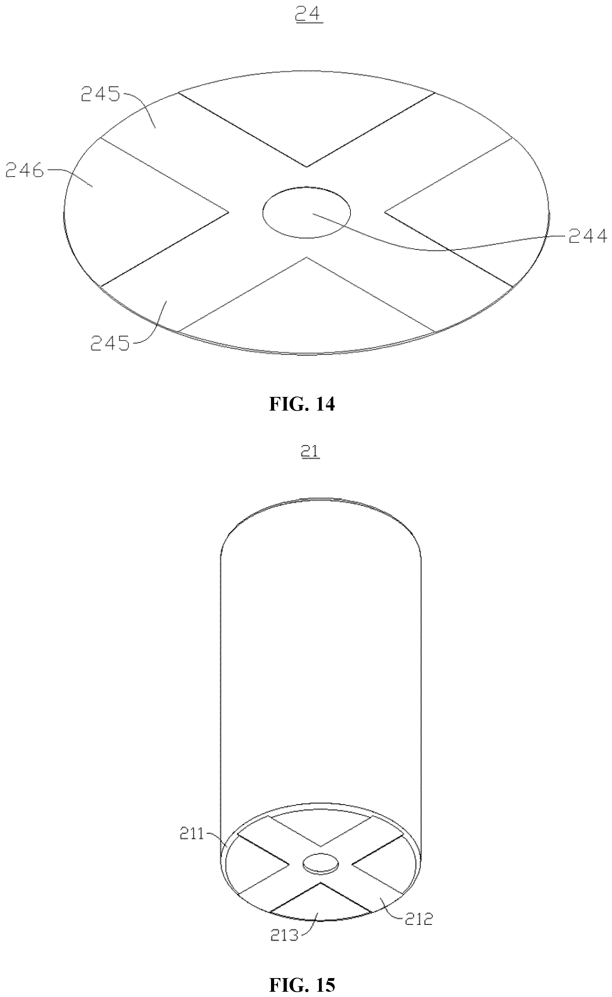

Referring to FIG. 14, FIG. 14 is a structural schematic diagram of a first current collector provided in some embodiments of the present application. In some embodiments, the first current collecting member 24 is provided with a central hole 244 penetrating through the first current collecting member 24 in the thickness direction and the first current collecting member 24 is formed with a guide groove 245 on the side facing the electrode assembly 21, the guide groove 245 being configured to guide, towards the outer periphery, electrolyte entering the electrode assembly 21 through the central hole 244.

The guide groove 245 is in communication with the central hole 244 and penetrates through the outer edge of the first current collecting member 24 along a radial direction of the central hole 244. The central hole 244 is arranged coaxially with the battery cell 20. In order to facilitate the entry of the electrolyte into the central hole 244, the second current collecting member 25 is also provided with a through hole 2513 arranged coaxially with the first current collecting member 24, the through hole 2513 being provided in the body portion 251 of the second current collecting member 25.

The guide groove may be arranged on the side of the first current collecting member 24 facing the electrode assembly 21 in different forms, such as in a radial arrangement, in a cross shape, or the like.

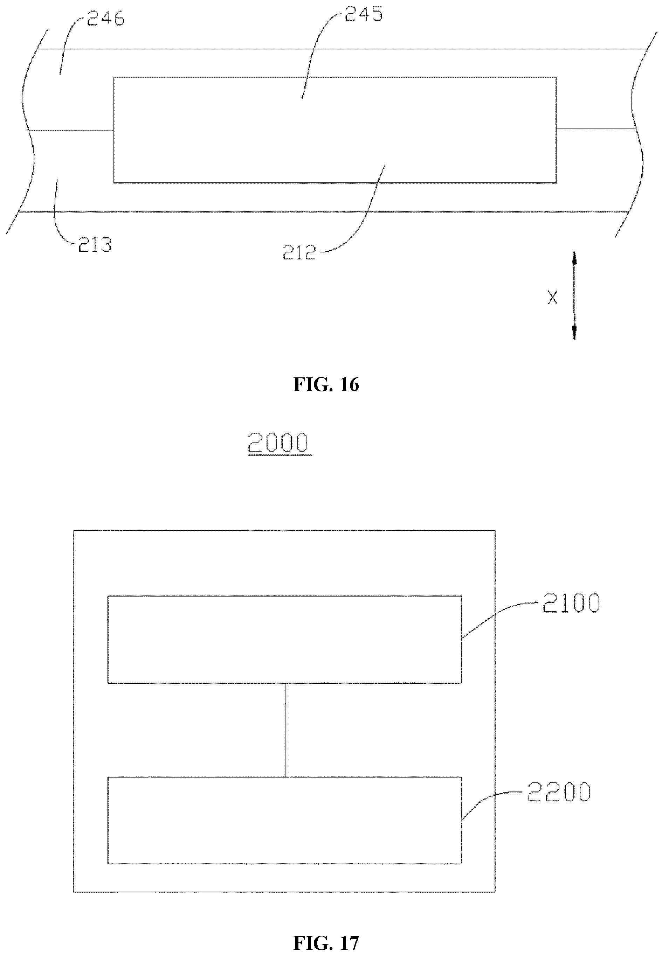

As shown in FIG. 15, FIG. 15 is a structural schematic diagram of an electrode assembly 21 provided in some embodiments of the present application. The tab 211 of the electrode assembly 21 is kneaded flat to form a recessed portion 212. The recessed portion 212 is used for the flow of electrolyte. The tab 211 in the region other than the recessed portion 212 is used for welding to the first current collecting member 24, and then a region of the weld mark is formed, which is defined as the first weld mark region 213. A region (defined as a second weld mark region 246) other than the groove 243 on the side of the first current collecting member 24 facing the electrode assembly 21 is used for welding to the region of the tab 211 that forms the weld mark. As shown in FIG. 16, after welding, the notch of the guide groove 245 of the first current collecting member 24 is provided opposite to the notch of the recessed portion 212 of the tab 211, and the guide groove 245 of the first current collecting member 24 and the recessed portion 212 of the tab 211 together define a space provided for the flow of the electrolyte. In some other embodiments, the kneaded flat tab 211 may also be provided without the recessed portion 212. The welding of the first welding region with the second weld mark region 246 may be realized by means of laser sweeping, and the depth of the laser sweeping should be less than the sum of the depths of the opposing recessed portion 212 and guide groove 245 to ensure a good infiltration of the electrode assembly 21 in the electrolyte.

In some other embodiments, the kneaded flat tab 211 may also be provided without the recessed portion 212, and when the welding of the tab 211 with the first current collecting member 24 is realized by laser sweeping, the depth of the laser sweeping should be less than the depth of the guide groove 245, so as to ensure a good infiltration of the electrode assembly 21 in the electrolyte.

The guide groove 245 is capable of guiding the electrolyte of the central hole 244 to a region other than the central hole 244, so that the electrolyte is uniformly distributed inside the battery cell 20, thereby sufficiently and uniformly infiltrating the electrode assembly 21 and reducing the possibility of lithium precipitation of the battery cell 20.

Referring to FIGS. 5 and 9, in some embodiments, the case 22 is formed with a first concave portion 223 recessed inwardly from the outer peripheral wall of the case 22, and the case 22 is formed with a first position-limiting portion 222 protruding from the inner peripheral wall of the case 22 at a position corresponding to the first concave portion 223, the first concave portion 223 and the first position-limiting portion 222 both being of annular structures.

Referring to FIGS. 5 and 9, the first position-limiting portion 222 includes a first connecting segment 2221, a second connecting segment 2222, and a third connecting segment 2223 connected in sequence, where the end of the first connecting segment 2221 that faces away from the second connecting segment 2222 is connected to the case 22, and the end of the third connecting segment 2223 that faces away from the second connecting segment 2222 is connected to the case 22. The first connecting segment 2221 and the third connecting segment 2223 are arranged opposite to each other along the thickness direction X of the end cover. The first connecting segment 2221 is provided close to the electrode assembly 21 relative to the third connecting segment 2223. The outer surface of the first connecting segment 2221, the outer surface of the second connecting segment 2222, and the outer surface of the third connecting segment 2223 together define the first concave portion 223. Among them, the outer surface of the first connecting segment 2221, the outer surface of the second connecting segment 2222, and the outer surface of the third connecting segment 2223 all refer to exposed surfaces of the first connecting segment 2221, the second connecting segment 2222, and the third connecting segment 2223.

In some embodiments, there is a circular arc as a transition between the first connecting segment 2221 and the second connecting segment 2222, and there is a circular arc as a transition between the second connecting segment 2222 and the third connecting segment 2223, thus avoiding scratching of the structure inside the case 22 due to the formation of edges at the connecting position between the first connecting portion 2521 and the second connecting segment 2222 and the connecting position between the second connecting segment 2222 and the third connecting segment 2223.

In some other embodiments, the first position-limiting portion 222 may also be a protrusion provided on the inner circumferential face of the case 22.

Forming the first position-limiting portion 222 in the inner wall of the case 22 has a large machining difficulty, while the difficulty of forming the first concave portion 223 in the outer peripheral wall of the case 22 is lower compared to the difficulty of forming the first position-limiting portion 222 directly in the inner peripheral wall of the case 22; therefore, the difficulty of molding the first position-limiting portion 222 is lowered by forming the first position-limiting portion 222 protruding from the inner peripheral wall of the case 22 at the position of the case 22 that corresponds to the first concave portion 223.

With continued reference to FIGS. 5 and 9, in some embodiments, the case 22 has a second position-limiting portion 224; and in the thickness direction X of the end cover, the second position-limiting portion 224 and the first position-limiting portion 222 are used for jointly limiting movement of the end cover 23 relative to the case 22 in the thickness direction.

The first position-limiting portion 222 is of an annular structure, and the edge of the end cover 23 is inserted in the space formed by the first position-limiting portion 222 and the second position-limiting portion 224.

The second position-limiting portion 224 and the first position-limiting portion 222 cooperate to jointly limit movement of the end cover 23 relative to the case 22 in the thickness direction X of the end cover, so as to maintain a stable connection relationship between the end cover 23 and the case 22.

In some embodiments, the second position-limiting portion 224 is a flanging structure formed by means of the case 22 being bent inwardly at a position of the opening 221. It can be understood that the second position-limiting portion 224 is a part of the case 22, which can reduce the connecting relationship on the case 22 and improve the sealing performance and structural strength of the case 22. In some other embodiments, the second position-limiting portion 224 and the case 22 may also be provided as two structures in a split manner, with the second position-limiting portion 224 being connected to the opening 221 end of the case 22 by means of welding, or the like.

The second position-limiting portion 224 is a flanging structure formed by means of the case 22 being bent inwardly at a position of the opening 221, so as to enable the second position-limiting portion 224 to stably position-limit the end cover 23 on the side of the end cover 23 facing away from the electrode assembly 21. Moreover, the second position-limiting portion 224 is a part of the case 22, which can also reduce the connecting relationship of the case 22 and thus improve the structural strength of the case 22.

With continued reference to FIGS. 5 and 9, in some embodiments, the battery cell 20 further includes a sealing member 27, the sealing member 27 being used between the first position-limiting portion 222 and the end cover 23 and between the second position-limiting portion 224 and the end cover 23.

The sealing member 27 includes a first sealing portion 271, a second sealing portion 272 and a third sealing portion 273 connected in sequence, where the first part 12 is used between the side of the first position-limiting portion 222 facing away from the electrode assembly 21 and the side of the end cover 23 facing the electrode assembly 21, the second sealing portion 272 is used between an inner circumferential face of the case 22 and an outer peripheral face of the end cover 23, and the third sealing portion 273 is used between the side of the second position-limiting portion 224 facing the electrode assembly 21 and the side of the end cover 23 facing away from the electrode assembly 21.

The sealing performance of the battery cell 20 is improved by means of the sealing member 27 being used between the first position-limiting portion 222 and the end cover 23 and between the second position-limiting portion 224 and the end cover 23.

Embodiments of the present application further provide a battery 100, the battery 100 including the battery cell 20 provided in any of the above embodiments.

The battery cell 20 includes a first current collecting member 24 and a second current collecting member 25, where the first current collecting member 24 is connected to the tabs 211, and the second current collecting member 25 connects the first current collecting member 24 and the first position-limiting portion 222 of the case 22. The first region 241 of the first member can be welded to the tab 211 of an outer ring layer, and the second region 242 of the first member can be welded to the tab 211 of an inner ring layer, so that the tabs 211 of the inner ring layer and the outer ring layer can both be connected to the first current collecting member 24, which enables uniform current conduction to be realized, so as to avoid the problem of excessive local overcurrent due to the failure of the tab 211 of the outer ring layer to be connected to the current collecting member, thereby reducing the risk of severe polarization of the tab 211 of the outer ring layer in the cyclic charging and discharging process, and thereby reducing the risk of lithium precipitation due to polarization, thus improving the safety performance of the battery 100.

Embodiments of the present application further provide an electrical device, the electrical device including a battery 100 provided in the above embodiments.

The battery 100 does not have the problem of local overcurrent due to the failure of the outer ring tab 211 to be connected to the current collecting member, thereby reducing the risk of severe polarization of the outer ring tab 211 in the cyclic charging and discharging process, and thereby reducing the risk of lithium precipitation, thus improving the electrical safety in the electrical device.

As shown in FIG. 17, embodiments of the present application provide a manufacturing device 2000 for a battery cell, the manufacturing device 2000 for a battery cell including a providing apparatus 2100 and an assembling apparatus 2200, the providing apparatus 2100 being configured to provide an electrode assembly 21, a case 22, an end cover 23, a first current collecting member 24, and a second current collecting member 25, where the electrode assembly 21 has tabs 211; the case 22 has an opening 221, the case 22 is used for accommodating the electrode assembly 21, and the case 22 is provided with a first position-limiting portion 222 protruding from the inner side face, the first position-limiting portion 222 being used for limiting movement of the end cover 23 towards a direction close to the electrode assembly 21; and the end cover 23 is used for covering the opening 221; and the assembling apparatus 2200 is configured to accommodate the electrode assembly 21 within the case 22, to connect the first current collecting member 24 to the tabs 211, to connect the second current collecting member 25 to the first current collecting member 24 and the first position-limiting portion 222, and to cover the opening 221 with the end cover 23, where the first current collecting member 24 includes a first region 241 overlapping with the first position-limiting portion 222 along a thickness direction X of the end cover and a second region 242 not overlapping with the first position-limiting portion 222 along the thickness direction, the first region 241 and the second region 242 both being welded to the tabs 211.

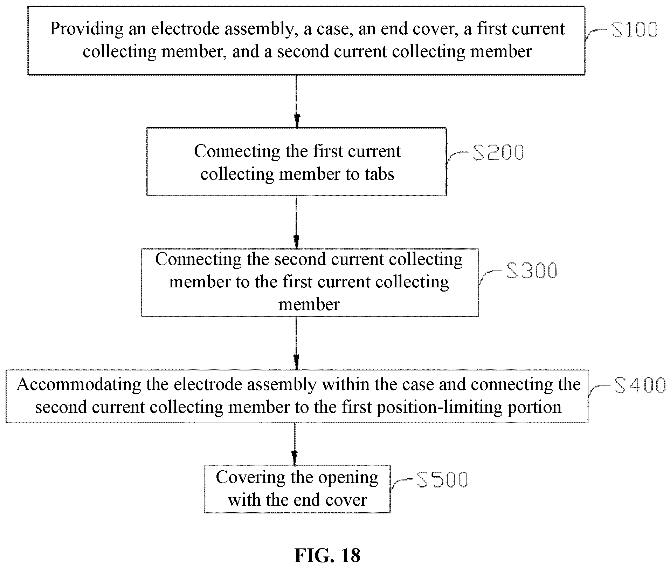

As shown in FIG. 18, embodiments of the present application further provide a manufacturing method for the battery cell 20, the manufacturing method including:
S100, providing an electrode assembly 21, a case 22, an end cover 23, a first current collecting member 24, and a second current collecting member 25, where the electrode assembly 21 has tabs 211; and the case 22 has an opening 221, the case 22 is used for accommodating the electrode assembly 21, the case 22 is provided with a first position-limiting portion 222 protruding from the inner side face, the first position-limiting portion 222 being used for limiting movement of the end cover 23 towards a direction close to the electrode assembly 21;
S200, connecting the first current collecting member 24 to the tabs 211;
S300, connecting the second current collecting member 25 to the first current collecting member 24;
S400, accommodating the electrode assembly 21 within the case 22 and connecting the second current collecting member 25 to the first position-limiting portion 222; and
S500, covering the opening 221 with the end cover 23,
where the first current collecting member 24 includes a first region 241 overlapping with the first position-limiting portion 222 along a thickness direction X of the end cover and a second region 242 not overlapping with the first position-limiting portion 222 along the thickness direction, and the first region 241 and the second region 242 both being welded to the tabs 211.

Embodiments of the present application provide a cylindrical battery cell 20, the cylindrical battery cell 20 including a case 22, an end cover 23, an electrode assembly 21, a first current collecting member 24, and a second current collecting member 25, where the electrode assembly 21 has tabs 211.

The case 22 has an opening 221, the case 22 is used to accommodate the electrode assembly 21, and the case 22 is formed with a first concave portion 223 recessed inwardly from the outer peripheral wall of the case 22, and the case 22 is formed with a first position-limiting portion 222 protruding from the inner peripheral wall of the case 22 at a position corresponding to the first concave portion 223, the first concave portion 223 and the first position-limiting portion 222 both being of annular structures, and the first position-limiting portion 222 being used for limiting movement of the end cover 23 towards a direction close to the electrode assembly 21, and the battery cell 20 further includes a second position-limiting portion 224, the second position-limiting portion 224 being a flanging structure formed by means of the opening 221 of the case 22 being bent inwardly, and the second position-limiting portion 224 being used for limiting movement of the end cover 23 in a direction of moving away from the electrode assembly 21. The end cover 23 is used for covering the opening 221; the first current collecting member 24 is disposed on the side of the first position-limiting portion 222 facing the electrode assembly 21 along a thickness direction X of the end cover, the first current collecting member 24 being used for connecting the tabs 211. The first current collecting member 24 includes a first region 241 overlapping with the first position-limiting portion 222 along a thickness direction X of the end cover and a second region 242 not overlapping with the first position-limiting portion 222 along the thickness direction, and the first region 241 and the second region 242 both being welded to the tabs 211. The second current collecting member 25 is disposed on the side of the first current collecting member 24 facing away from the electrode assembly 21 along the thickness direction X of the end cover, the second current collecting member 25 being used for connecting the first current collecting member 24 and the first position-limiting portion 222, thus realizing the electrical connection between the tabs 211 and the case 22.

The tab 211 of the inner ring layer and the tab 211 of the outer ring layer of the battery cell 20 can both be connected to the first current collecting member 24, which enables uniform current conduction to be realized, so as to avoid the problem of excessive local overcurrent due to the failure of the tab 211 of the outer ring layer to be connected to the current collecting member, thereby reducing the risk of severe polarization of the tab 211 of the outer ring layer in the cyclic charging and discharging process, and thereby reducing the risk of lithium precipitation due to polarization.

The above are only preferred examples of the present application, and are not intended to limit the present application. For those skilled in the art, the present application may have various modifications and changes. Any modification, equivalent replacement, improvement, etc. made within the spirit and principle of the present application shall fall within the scope of protection of the present application.

## Claims

1. A battery cell, comprising:
an electrode assembly having tabs;
a case having an opening, the case being used for accommodating the electrode assembly, and the case being provided with a first position-limiting portion protruding from the inner side face;
an end cover for covering the opening, the first position-limiting portion being used for limiting movement of the end cover towards a direction close to the electrode assembly;
a first current collecting member disposed on the side of the first position-limiting portion facing the electrode assembly along a thickness direction of the end cover, the first current collecting member being used for connecting the tabs; and
a second current collecting member disposed on the side of the first current collecting member facing away from the electrode assembly along the thickness direction, the second current collecting member being used for connecting the first current collecting member and the first position-limiting portion,
wherein the first current collecting member comprises a first region overlapping with the first position-limiting portion along the thickness direction and a second region not overlapping with the first position-limiting portion along the thickness direction, the first region and the second region both being welded to the tabs.

2. The battery cell according to claim 1, wherein the second current collecting member comprises:
a body portion stacked with the first current collecting member along the thickness direction, the body portion being used for connecting the side of the first current collecting member facing away from the electrode assembly; and
a connecting portion connected to the body portion, a part of the connecting portion extending to the side of the first position-limiting portion in its protruding direction to effect a connection between the first current collecting member and the first position-limiting portion.

3. The battery cell according to claim 2, wherein the connecting portion comprises:
a first connecting portion for abutting against the side of the first position-limiting portion in its protruding direction; and
a second connecting portion connected to the end of the first connecting portion facing away from the body portion, the second connecting portion being used for abutting against the side of the first position-limiting portion facing away from the electrode assembly.

4. The battery cell according to claim 3, wherein the first connecting portion extends along the thickness direction.

5. The battery cell according to claim 3 or 4, wherein the first connecting portion is a closed-ring structure extending along a circumferential direction of the case.

6. The battery cell according to claim 5, wherein the second connecting portion is a closed-ring structure surrounding the edge of the first connecting portion.

7. The battery cell according to any one of claims 1-6, wherein the first current collecting member and the second current collecting member form a plug-in fit along the thickness direction.

8. The battery cell according to claim 7, wherein the first current collecting member is formed with a groove on the side facing the end cover, a part of the second current collecting member being accommodated in the groove.

9. The battery cell according to any one of claims 1-8, wherein the first current collecting member is provided with a central hole penetrating through the first current collecting member along the thickness direction, and the first current collecting member is formed with a guide groove on the side facing the electrode assembly, the guide groove being configured to guide, towards the outer periphery, electrolyte that enters the electrode assembly through the central hole.

10. The battery cell according to any one of claims 1-9, wherein the case is formed with a first concave portion recessed inwardly from the outer peripheral wall of the case, the first position-limiting portion protruding from the inner peripheral wall of the case is formed in the case at a position corresponding to the first concave portion, and the first concave portion and the first position-limiting portion are both annular structures.

11. The battery cell according to any one of claims 1-10, wherein the case has a second position-limiting portion; and
in the thickness direction of the end cover, the second position-limiting portion and the first position-limiting portion are used for jointly limiting movement of the end cover relative to the case in the thickness direction.

12. The battery cell according to claim 11, wherein the second position-limiting portion is a flanging structure in which the case is folded inward at the position of the opening.

13. The battery cell according to claim 11 or 12, wherein the battery cell further comprises a sealing member, the sealing member being used between the first position-limiting portion and the end cover and between the second position-limiting portion and the end cover.

14. A battery, comprising the battery cell according to any one of claims 1-13.

15. An electrical device, comprising the battery according to claim 14.

16. A manufacturing device for a battery cell, comprising:
a providing apparatus configured to provide an electrode assembly, a case, an end cover, a first current collecting member, and a second current collecting member, wherein the electrode assembly has tabs; the case has an opening, the case is used for accommodating the electrode assembly, and the case is provided with a first position-limiting portion protruding from the inner side face, the first position-limiting portion being used for limiting movement of the end cover towards a direction close to the electrode assembly; and the end cover is used for covering the opening; and
an assembling apparatus configured to accommodate the electrode assembly within the case, to connect the first current collecting member to the tabs, to connect the second current collecting member to the first current collecting member and the first position-limiting portion, and to cover the opening with the end cover,
wherein the first current collecting member comprises a first region overlapping with the first position-limiting portion along a thickness direction of the end cover and a second region not overlapping with the first position-limiting portion along the thickness direction, the first region and the second region both being welded to the tabs.

17. A manufacturing method for a battery cell, comprising:
providing an electrode assembly, a case, an end cover, a first current collecting member, and a second current collecting member, wherein the electrode assembly has tabs; and the case has an opening, the case is used for accommodating the electrode assembly, and the case is provided with a first position-limiting portion protruding from the inner side face, the first position-limiting portion being used for limiting movement of the end cover towards a direction close to the electrode assembly;
connecting the first current collecting member to the tabs;
connecting the second current collecting member to the first current collecting member;
accommodating the electrode assembly within the case and connecting the second current collecting member to the first position-limiting portion; and
covering the opening with the end cover,
wherein the first current collecting member comprises a first region overlapping with the first position-limiting portion along a thickness direction of the end cover and a second region not overlapping with the first position-limiting portion along the thickness direction, the first region and the second region both being welded to the tabs.
